Europäisches Patentamt

European Patent Office

Office européen des brevets

(19)

(11) Veröffentlichungsnummer: **0 330 167 B1**

# (12) EUROPÄISCHE PATENTSCHRIFT

(45) Veröffentlichungstag der Patentschrift:
05.06.91 Patentblatt 91/23

(51) Int. Cl.⁵: **B67B 5/03**, B29C 63/42

(21) Anmeldenummer: 89103070.2

(22) Anmeldetag: 22.02.89

(54) **Verfahren zum Aufsetzen einer Schrumpfhülse auf das Verschlussende eines Behälters und zugehörige Vorrichtung.**

(30) Priorität: 25.02.88 DE 3805951

(43) Veröffentlichungstag der Anmeldung:
30.08.89 Patentblatt 89/35

(45) Bekanntmachung des Hinweises auf die Patenterteilung:
05.06.91 Patentblatt 91/23

(84) Benannte Vertragsstaaten:
AT BE CH DE ES FR GB GR IT LI LU NL SE

(56) Entgegenhaltungen:
EP-A- 0 104 292
GB-A- 1 430 090
US-A- 3 738 210

(73) Patentinhaber: KRONES AG Hermann Kronseder Maschinenfabrik
Böhmerwaldstrasse 5 Postfach 1230
W-8402 Neutraubling (DE)

(72) Erfinder: Eder, Erich
Goethestrasse 6
W-8405 Donaustauf (DE)
Erfinder: Winter, Horst
Albrecht-Altdorfer-Strasse 14
W-8402 Neutraubling (DE)

(74) Vertreter: Patentanwälte Grünecker, Kinkeldey, Stockmair & Partner
Maximilianstrasse 58
W-8000 München 22 (DE)

**Beschreibung**

Die Erfindung bezieht sich auf ein Verfahren zum Aufsetzen einer Schrumpfhülse auf das Verschlußende eines Behälters gemäß den Merkmalen des Oberbegriffs des Anspruchs 1 und auf eine zugehörige Vorrichtung gemäß den Merkmalen des Oberbegriffs des Anspruches 5.

Schrumpfhülsenaufsetzaggregate werden einerseits zur Sicherung des Verschlusses von Getränkeflaschen verwendet und andererseits dienen sie dazu, kenntlich zu machen, ob eine Flasche bereits geöffnet wurde, oder nicht. Auf das Verschlußende der Flasche, also am oberen Ende des Flaschenhalses, wird dazu eine Schrumpfhülse aufgesetzt, die einerseits den Verschluß, beispielsweise eine Schraub- oder Preßkapsel, und andererseits einen Teil des Flaschenhalses umgibt. Durch Aufschrumpfen unter Wärmeeinwirkung hält die Schrumpfhülse den Verschluß fest an dem Flaschenhals. Ein Öffnen der Flasche ist nur möglich, wenn die Schrumpfhülse zerstört wird. Daran ist daher immer zu erkennen, ob eine Flasche bereits geöffnet wurde oder nicht.

Ein Verfahren und eine Vorrichtung der eingangs genannten Art sind z.B. aus der US-A-37 38 210 bekannt.

Bei der bekannten Vorrichtung wird ein Schlauch, aus dem die Schrumpfhülsen herausgeschnitten werden, von einer Vorratstrommel abgewickelt. Der Schlauch liegt auf der Vorratstrommel flach gefaltet vor. Nachdem der Schlauch von der Vorratstrommel abgezogen wurde, wird er über einen Aufspreizdorn geführt. Bei der bekannten Vorrichtung, bei der der Dorn senkrecht angeordnet ist, wird der Flaschenhals der herangeförderten Flasche unterhalb des Dornes positioniert, wonach der Schlauch mittels eines Greifers entsprechend der gewünschten Höhe der Schrumpfhülse nach unten gezogen wird, wobei das untere Ende des Schlauches über den Flaschenhals gestülpt und anschließend abgeschnitten wird.

Auf diese Wiese läßt sich ein verhältnismäßig genaues Aufbringen der Hülse gewährleisten. Nachteilig ist jedoch der taktweise Betrieb der Vorrichtung, d.h. die Fördereinrichtung für die Flaschen muß stillstehen, wenn die Schrumpfhülse aufgebracht wird. Ferner ist der ebenfalls taktweise arbeitende Greifer verhältnismäßig aufwendig. Hohe Leistungen können mit dem taktweisen Betrieb nicht erreicht werden.

Eine ähnlich arbeitende Vorrichtung ist auch aus der US-A-27 65 607 und der US-A-35 94 975 bekannt.

Darüberhinaus ist auch aus der EP-A-104 292 eine Vorrichtung bekannt, mit der die Schrumpfhülsen kontinuierlich auf die Flaschenhälse aufgesetzt werden, ohne daß die Fördereinrichtung für die Flaschen im Moment des Aufsetzens stillstehen muß. Bei dieser Vorrichtung wird der flachgelegte Schlauch auseinandergefaltet und, die Knicklinien aufeinanderliegend, erneut zusammengefaltet. Der Schlauch durchläuft in dieser Faltstellung ein Messerwalzenpaar, das aus dem Schlauch quer zu seiner Längserstreckung die Schrumpfhülsen herausschneidet. Die abgeschnittenen Schrumpfhülsen werden nun weiter durch eine von außen angreifende sich erweiternde Führung gefördert und springen in dieser Führung aufgrund der erneut vorgenommenen Faltung, eine etwa trapezförmige Gestalt annehmend, auseinander und werden an ihrer Vorderkante von dem Flaschenhals der geförderten Flasche erfaßt und auf das Verschlußende aufgesetzt.

Obwohl mit der bekannten Vorrichtung ein kontinuierlicher Betrieb möglich ist, lassen sich nur Schrumpfhülsen aus einem Folienschlauch mit mindestens 75 μm verarbeiten, da die gefaltete Schrumpfhülse eine ausreichende Eigenspannung aufweisen muß, um in die Trapezform zurückzuspringen. Weiterhin muß die Schrumpfhülse eine gewisse Mindestlänge aufweisen, damit sie im abgeschnittenen Zustand noch sicher zum Flaschenhals geführt werden kann. Schließlich kann es durch das Schneiden mittels der Messerwalzen, bei dem die Schlauchhälften gegeneinandergedrückt werden, zu einem "Zusammenkleben" der Schrumpfhülsen führen, das das gewünschte Aufspringen derselben beim Aufsetzen auf den Flaschenhals verhindert.

Der Erfindung liegt daher die Aufgabe zugrunde, ein Verfahren und eine Vorrichtung der eingangs genannten Art in der Weise zu verbessern, daß, auch mit dünnwandigen Schlauchen und Schrumpfhülsen geringer Höhe, das Aufsetzen der Schrumpfhülsen bei hoher Durchsatzleistung erfolgen kann.

Diese Aufgabe wird erfindungsgemäß für das Verfahren durch die kennzeichnenden Merkmale des Anspruches 1 und für die Vorrichtung durch die kennzeichnenden Merkmale des Anspruches 5 gelöst. Da der Schlauch von schräg oben entgegen der Forderrichtung der Behälter zugeführt wird, können sich die Behälter mit ihrem Verschlußende von hinten in den nach unten offenen Schlauch hineinbewegen, während das vordere Ende des Schlauches bereits so tief liegt, daß die Behälter mit der Oberkante ihres Verschlußendes an der Vorderkante des Schlauches anstoßen würden. Genau in dem Moment, in welchem das Verschlußende des Behälters in das nach unten offene Ende des Schlauches eintaucht, wird der Schlauch abgelängt, so daß das Verschlußende des Behälters das abgelangte Ende des Schlauches, also die Schrumpfhülse, automatisch mitnimmt. Das alles kann kontinuierlich erfolgen, ohne daß ein Stillstand der Behälter unterhalb des Dornes nötig wäre. Auf diese Weise kann mit der erfindungsgemaßen Vorrichtung ein hoher Flaschendurchsatz gefahren werden. Da die Schrumpfhülse erst abgeschnitten wird, nachdem das Verschlußende des Behälters bereits in das offene Ende des Schlauches eingetaucht ist, kann die Höhe der Schrumpfhülse sehr klein gewählt werden, da eine Weiterförderung der Schrumpfhülse nicht mehr erfolgen muß. Auch kann die Folienstärke des Schlauches herabgesetzt werden, da die Schrumpfhülse solange, bis der Flaschenhals eintaucht, von dem Dorn aufgeweitet wird. Neben der Erhöhung des Flaschendurchsatzes durch die kontinuierliche Betriebsweise wird daher auch Material eingespart.

Besonders hohe Leistungen können mit dem erfindungsgemäßen Verfahren erzielt werden, wenn man mit dem Abschneiden der Schrumpfhülse bereits beginnt, Wenn das, in Förderrichtung der Behälter gesehen, hintere untere Ende des Schlauches noch oberhalb des Verschlußendes des Behälters liegt. Der Abstand der Unterkante der Schrumpfhülse zur Oberkante des Behälters wird dabei minimal sein.

Der Schlauch läßt sich bei hohen Schnittgeschwindigkeiten des Messers noch sauberer durchschneiden, wenn er gemäß Merkmal des Anspruches 3 vor dem Abschneiden erwärmt wird.

Es hat sich zum Erreichen hoher Durchsatzgeschwindigkeiten als vorteilhaft herausgestellt, wenn man nach Anspruch 4 die Schrumpfhülse in Förderrichtung des Behälters abschneidet.

Der kontinuierliche Betrieb der erfindungsgemäßen Vorrichtung wird gemäß den Merkmalen des Anspruches 6 dadurch gefördert, daß die Schneideinrichtung unmittelbar unterhalb des unteren Endes des Dornes angeordnet ist und eine sich um eine außerhalb des Dornes liegende Drehachse drehbare Radialschneide aufweist. Mit einer solchen Radialschneide lassen sich verhältnismäßig hohe Schnittgeschwindigkeiten erzielen, die es ermöglichen, daß der Schlauch mit praktisch unveränderter Geschwindigkeit kontinuierlich über den Dorn geschoben werden kann.

Gemäß einer im Anspruch 7 beschriebenen Weiterbildung der Erfindung kann der Dorn an seiner Unterseite von einer Matrize, eine Förderblende für den Schlauch freilassend, umgeben sein. Auf diese Weise wirken die Unterseite des Dornes und die Matrize als Gegenschneide mit der Radialschneide eines vorgesehenen Drehmessers zusammen. Hierdurch wird trotz des mechanischen Ablangens des Schlauches eine Möglichkeit geboten, Schlauchmaterial mit sehr dünner Wandstärke, z.B. 35 um, abzulangen, da der Folienschlauch während des Schneidens allseitig unterstützt wird. Das Messer kann z.B. durch eine Feder gegen die Matrize gedrückt werden, so daß es dort während des Schnittes fest anliegt.

Nach dem Merkmal des Anspruches 8 ist es vorteilhaft, wenn die Drehrichtung des Drehmessers im wesentlichen mit der Förderrichtung der Behälter übereinstimmt, da sich so eine weitere Erhöhung des Durchsatzes erzielen läßt.

Die nach den Merkmalen des Anspruches 9 vorgesehene in die Horizontale übergehende Andrückfläche der Matrize gewährleistet in vorteilhafter Weise, daß die Schrumpfhülse nach dem Abschneiden vom Schlauch stets gleichmäßig an den Verschlußenden der nacheinander durch die Vorrichtung hindurchgeführten Flaschen angeordnet ist.

Wenn gemäß Merkmal 10 auf der Unterseite der Matrize Reinigungsschlitze ausgebildet sind, findet nach jedem Abschneiden einer Schrumpfhülse eine automatische Reinigung und Nachschärfung der Radialschneide des Drehmessers statt.

Obwohl es bei Vorsehen eines mechanischen Messers zur Erreichung eines ziehenden Schnitts prinzipiell möglich ist, die Radialschneide schräg zur Radialen anzustellen, ist gemäß den Merkmalen des Anspruches 11 in vorteilhafter Weise vorgesehen, daß die Radialschneide, in ihrer Mitte eine Spitze aufweisend, etwa dreiecksartig ausgebildet ist. Hierdurch wird nämlich nicht nur ein ziehender Schnitt erreicht, sondern beim Anschnitt ein praktisch punktförmiger Anstich des Schlauches, von dem aus beidseitig ein ziehender Schnitt erfolgt, bis die Schrumpfhülse abgeschnitten ist.

Besonders vorteilhaft ist das Merkmal des Anspruches 12. Der Gegenhalt, der nach Möglichkeit dort anzubringen ist, wo die Hülse als letztes von dem Schlauch abgeschnitten wird, bewirkt zusammen mit der Vorschubbewegung der Flasche ein Kippmoment auf die Hülse in Richtung des Verschlußendes der Flasche, so daß das Aufsetzen der Schrumpfhülse auf das Verschlußende der Flasche dadurch aktiv unterstutzt wird. Es hat sich herausgestellt, daß dieser Gegenhalt eine besonders wichtige Rolle für die Erhöhung der Durchsatzleistung spielt.

Durch die Merkmale des Anspruches 13 wird in vorteilhafter Weise gewährleistet, daß unabhängig von der Transportgeschwindigkeit des Behälters stets eine Schrumpfhülse in der vorgesehenen Höhe, passend zu dem Behälter abgeschnitten wird.

Eine solche Synchronisierung läßt sich nach dem Merkmal des Anspruches 14 auf einfache Weise dadurch erreichen, daß der Antrieb des Drehmessers der Schneideinrichtung über einem Getriebezug mit der Zuführeinrichtung des Schlauches verbunden ist. Die Zuführeinrichtung des Schlauches läßt sich vorteilhafterweise auch auf die Fördergeschwindigkeit der Behälter abstimmen.

Besonders vorteilhaft ist es, wenn der Getriebezug gemäß Anspruch 15 ein Kurbelschleifengetriebe mit wellenförmigem Geschwindigkeitslauf derart enthält, daß während des Schneidvorganges des Schlauchs die Zuführeinrichtung ihre geringste und das Drehmesser seine höchste Geschwindigkeit aufweist. Hierdurch läßt sich der Schlauch besonders sauber und möglichst gerade abschneiden.

Gemäß einer im Anspruch 16 beschriebenen Ausgestaltung ist der Antrieb des Drehmessers über eine Eintourenkupplung mit der Zuführeinrichtung des Schlauches verbunden. Das hat den Vorteil, daß immer dann, wenn der Schlauch einen bestimmten Weg zurückgelegt hat, das Drehmesser beschleunigt wird, um die Schrumpfhülse abzuschneiden, während es nach dem Schnitt langsamer läuft oder sogar stillsteht. Hierdurch läßt sich auf vorteilhafte Weise erreiche, daß der Schlauch unabhängig von der momentanen Leistung, d.h. dem momentanen Flaschendurchsatz, der Vorrichtung stets mit derselben Schnittgeschwindigkeit der Radialschneide durchtrennt wird.

Anstelle eines Getriebezuges ist es nach dem Merkmal des Anspruches 17 auch möglich, das Drehmesser von einem gesteuerten Schrittmotor anzutreiben.

Nach den Merkmalen des Anspruches 18 läßt sich das kontinuierliche Arbeiten der Vorrichtung weiter dadurch fördern, daß die Zuführeinrichtung für den Schlauch einlaufseitig eine einem Schwenkhebel angeordnete Einfädeleinrichtung mit einer Umlaufrolle und einer Gegenwalze sowie einer nachgeordneten Aufspreizführung aufweist, wobei die Einfädeleinrichtung von einer Außerbetriebsstellung, in der die Oberseite des Dornes freiliegt, in eine Inbetriebstellung schwenkbar ist, in der die Aufspreizführung über die Oberseite des Dornes greift.

Auf diese Weise kann beim Zuführen eines neuen Schlauches der Stillstand der Vorrichtung verringert werden, da einfach nach Einschwenken des Schwenkhebels der Schlauch selbsttätig in die Vorrichtung hineintransportiert wird.

Gemäß einer nach Anspruch 19 vorgesehenen vorteilhaften Weiterbildung sind zwei Einfädeleinrichtungen vorgesehen, die wechselseitig in die Betriebsstellung bringbar sind. Auf diese Weise ist es möglich, den Betrieb der Vorrichtung ohne Unterbrechung aufrecht zu erhalten, wobei beim Leerlaufen der ersten Einfädelungseinrichtung über eine Steuerung das Ausschwenken der ersten Einfädelungseinrichtung und das Einschwenken der zweiten Einfädelungseinrichtung automatisch vorgenommen werden kann.

Zum Einfädeln ist es günstig, wenn gemäß den Merkmalen des Anspruches 20 am Dornanfang Antriebswalzen vorgesehen sind, die über eine Untersetzung mit dem Antrieb der Zuführeinrichtung des Schlauches verbunden und auf einer Freilaufwelle gelagert sind. Dadurch wird der Schlauchanfang einer neuen Schlauchrolle wegen der Untersetzung der Antriebswalzen zunächst mit einer geringeren Geschwindigkeit auf den Dorn aufgeschoben. Sobald die Zuführeinrichtung den Schlauch erfaßt, erreicht er dann seine normale Vorschubgeschwindigkeit. Da die Antriebswalzen auf einer Freilaufwelle gelagert sind, laufen sie im normalen Vorschubbetrieb leer mit. Durch die Antriebswalzen läßt sich trotz der hohen Vorschubgeschwindigkeiten des Schlauches ein einwandfreies Einführen eines neuen Schlauchanfanges gewährleisten.

Das Abscheiden des Schrumpfschlauches läßt sich noch weiter verbessern, wenn gemäß Anspruch 21 die Radialschneide etwa in ihrer Schneidenlängsrichtung quer zur Drehachse verschieblich gelagert und mit einer Steuereinrichtung verbunden ist, die während des Abschneidens des Schlauchs die Radialschneide radial verschiebt. Hierdurch läßt sich beim Abschneiden des Schlauches ein ziehender Schnitt erreichen, und zwar auch dann, Wenn die Schneide gerade ist, obwohl auch hier ein über die Schneidkante hinausragender Zahn vorgesehen sein kann, um das Einschneiden in den Schlauch zu unterstützen.

Eine besonders einfache Lagerung ergibt sich gemäß Anspruch 22, wenn an der Drehachse eine die Radialschneide verschieblich haltende Kulissenführung angebracht ist. So kann die radiale Bewegung der Radialschneide erfolgen, ohne daß hiervon die Drehbewegung beeinflußt wird.

Besonders leicht läßt sich der ziehende Schnitt verwirklichen, wenn gemäß Anspruch 23 die Steuereinrichtung eine in der Unterseite der Vorrichtung angeordnete Nutkurve umfaßt, in die eine an der Radialschneide angebrachte Kurvenrolle eingreift. Die Nutkurve wird dabei so kontrolliert sein, daß die Radialschneide beim Drehen radial nach außen fährt und erst kurz Vor Erreichen des abzuschneidenden Schlauches radial nach innen verschoben Wird. Dieses radiale Nachinnenschieben dauert an, bis die Radialschneide den Schlauch vollständig abgeschnitten hat.

Im folgenden wird ein Ausführungsbeispiel der Erfindung anhand einer Zeichnung näher erläutert. Es zeigen :

Fig. 1 in einer schematischen Seitenansicht eine erfindungsgemäße Vorrichtung, und

Fig. 2 in einer perspektivischen Ansicht, etwa in Richtung des Pfeiles II, die Unterseite der Vorrichtung aus Fig. 1.

Fig. 3 in einer Druntersicht auf die Vorrichtung eine Variante der Schneideinrichtung, und

Fig. 4 einen Schnitt durch die Unterseite der Vorrichtung in einer Detailansicht entsprechend der Linie IV-IV in Fig. 3.

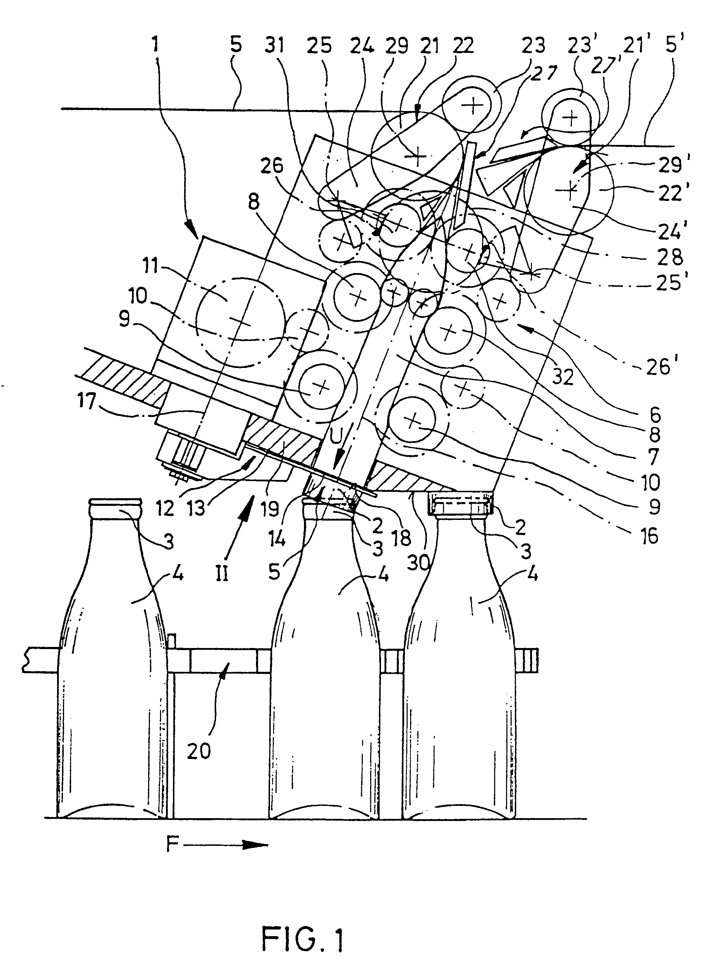

In der Fig. 1 ist in einer Seitenansicht schematisch die erfindungsgemäße Vorrichtung 1 zum Aufsetzen von Schrumpfhülsen 2 auf das Verschlußende eines Flaschenhalses 3 einer angeförderten Flasche 4.

Die Schrumpfhülsen 2 werden von einem Schlauch 5 abgeschnitten, der durch eine Zuführeinrichtung 6 zu dem Flaschenhals der jeweiligen Flasche 4 gefördert wird.

Der Schlauch 5 wird durch die Zuführeinrichtung 6 von einer nicht näher dargestellten Rolle abgewickelt.

Die Zuführeinrichtung 6 weist einen im wesentlichen vertikal angeordneten Dorn 7 auf, auf den der Schlauch 5 aufgeschoben und dadurch zu einer im wesentlichen zylindrischen Form aufgespreizt wird.

Der Dorn 7 weist im wesentlichen eine zylindrische Form auf, ist jedoch in seinem Mittelteil beidseitig abgeflacht. An dem oberen Ende weist der Dorn die Form eines beidseitig abgeflachten Konus auf. An dem oberen und an dem unteren Ende des abgeflachten Mittelteils greifen beidseitig des Dornes 7 Antriebswalzen 8 und 9 an, die den über den Dorn 7 geschobenen Schlauch 5 nach unten in Richtung des Pfeiles U fördern. Den Antriebswalzen 8 und 9 kommt dabei auch die Funktion zu, den Dorn 7 in der in der Fig. 1 gezeigten Lage zu halten.

Der Antrieb der Antriebswalzen 8 und 9 erfolgt über zwischengeschaltete Zahnräder 10 und durch einen Motor 11.

Aus Fig. 1 ist gut erkennbar, daß der Dorn 7 schräggestellt ist. Wichtig ist dabei, daß die Schrägstellung so vorgenommen ist, daß die Förderrichtung U des Schlauches 5 eine Komponente aufweist, die entgegengesetzt der Förderrichtung F der Flaschen 4 ausgerichtet ist. Das bedeutet, daß die Flasche 4 mit ihrem Flaschenhals 3 von unten in das offene Ende des Schlauches 5 hineinlaufen.

Unterhalb des Dornes 7 ist eine Schneideinrichtung 12 vorgesehen.

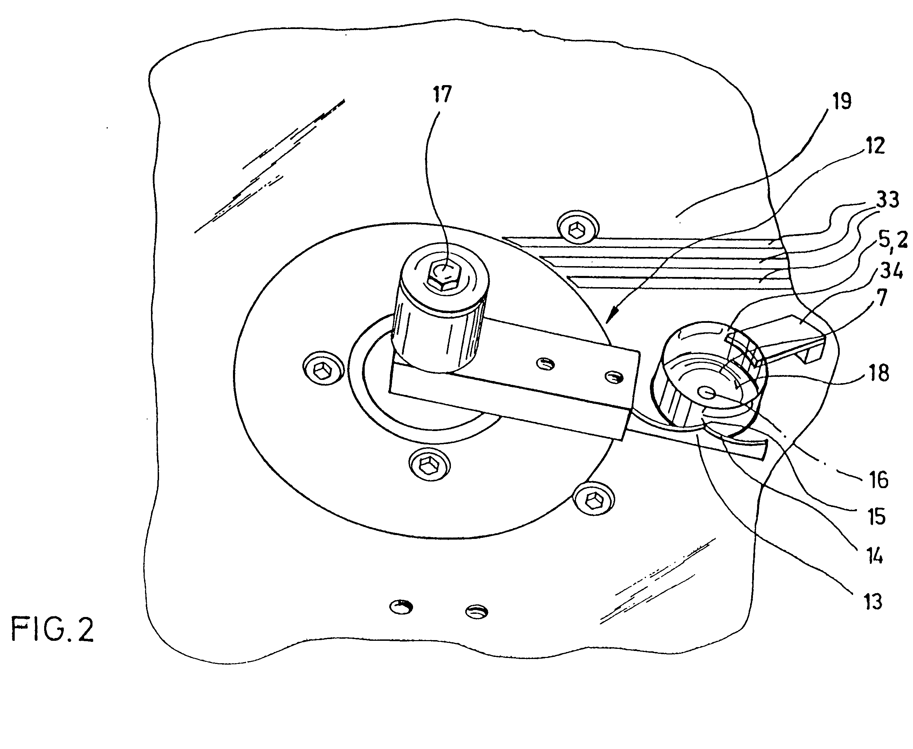

Die Schneideinrichtung 12 umfaßt ein Drehmesser 13 das, wie besser aus Fig. 2 ersichtlich ist eine im wesentlichen radial ausgerichtete Schneide 14 aufweist. Die genaue Form der Schneide 14 entspricht etwa zweinebeneinander ausgebildeter konkaver Ausnehmungen, deren einander zugewandten Ränder in der Mitte der Schneide 14 eine Spitze 15 bilden so daß die Schneide 14 in ihrer Mitte etwa dreiecksartig ausgebildet ist. Das Drehmesser 13 ist um eine außerhalb der Längsachse 16 des Dornes 7 liegenden Drehachse drehbar angetrieben. Der Antrieb des Drehmessers 13 erfolgt synchron mit dem Vorschub der Zuführreinrichtung 6 auch über den Motor 11.

Wie besonders gut aus Fig. 2 ersichtlich ist, ist der Dorn 7 an seiner Unterseite 18 von einer Matrize 19 eine Förderblende für den Schlauch 5 freilassend umgeben. Das Drehmesser 13 ist mit seiner Schneide so dicht an der Unterseite 18 des Dornes 7 angeordnet, daß die Unterseite 30 der Matrize 19 als Gegenschneide zu der Radialschneide 14 des Drehmessers 13 wirken. Die Unterseite 18 des Dornes 7 ist gegenüber der Unterseite der Matrize 19 um wenige hundertstel bis zehntel Millimeter zurückgesetzt und wirkt als Gegenhalt beim Abschneiden des Schlauches.

Bei dem hier gezeigten Ausführungsbeispiel ist der Antrieb des Drehmessers 13 über einen nicht näher dargestellten Getriebezug mit dem Antrieb der Zuführreinrichtung 6 verbunden, so daß, wie oben bereits angedeutet, der Motor 11 sowohl die Zuführeinrichtung 6 als auch das Drehmesser 13 antreibt.

Wie in der Fig. 1 ebenfalls nicht dargestellt ist, ist zwischen dem Motor 11 und dem Drehmesser 13 eine an sich bekannte Eintouren-Kupplung zwischengeschältet, die bewirkt, daß nach einer bestimmten Anzahl von Umdrehungen des Motors 11 eine einmalige Umdrehung des Drehmessers 13 folgt, wonach das Drehmesser 13 stillsteht, bis der Motor 11 wieder eine vorbestimmte Anzahl Umdrehungen durchgeführt hat.

Die Zuführeinrichtung für die Flaschen 4 kann in herkömmlicher Weise aus einem andeutungsweise in Fig. 1 dargestellten Flaschenstern 20 bestehen. Der Antrieb des Flaschensterns 20 ist in herkömmlicher Weise mit dem Motor 11 der Zuführreinrichtung 6 abgestimmt, beispielsweise synchronisiert oder sensorgesteuert. Anstelle eines eigenen Motors können die Zuführeinrichtung und das Drehmesser auch über ein Getriebe mit der Grundmaschine verbunden sein, welche auch den Flaschenstern 20 antreibt.

Betrachtet man in Fig. 1 das einlaufseitige Ende der Zuführreinrichtung 6, so erkennt man zwei Einfädeleinrichtungen 21 und 21'. Beide Einfädeleinrichtungen 21 und 21' sind prinzipiell gleich aufgebaut und symmetrisch zueinander angeordnet, so daß im folgenden nur eine Einfädeleinrichtung 21 näher beschrieben wird.

Die Einfädeleinrichtung 21 umfaßt eine Umlaufrolle 22 und eine Gegenwalze 23. Die Rolle 22 und die Walze 23 sind auf einem gemeinsamen Schwenkhebel 24 angeordnet.

Konzentrisch zur Schwenkachse 25 des Schwenkhebels 24 isr ein Zahnradsegment 26 drehfest mit dem Schwenkhebel 24 verbunden.

In Drehrichtung der Umlaufrolle 22 nachgeordnet, ist eine Aufspreizführung 27, die ein Aufspreizen des zusammengelegt zwischen der Antriebswalze 22 und der Gegenwalze 23 geförderten Schlauches bewirkt.

Zwischen den beiden Zahnradsegmenten 26 und 26' der beiden Einfädelungseinrichtungen 21 und 21'ist ein Zahnrad 28 angeordnet, mit dem durch Drehen desselben über die Zahnradsegmente 26 und 26' ein Hereinschwenken bzw. Herausschwenken der Einfädelungseinrichtungen 21 und 21' bewirkt werden kann.

Die Fig. 1 zeigt die Einfädelungseinrichtung 21 in der eingeschwenkten Inbetriebstellung, in der die Aufspreizführung 27 über die Oberseite des Dornes 7 greift. Die Einfädeleinrichtung 21 ist hingegen in der zurückgeschwenkten Außerbetriebstellung dargestellt, in der die Aufspreizführung 27' von der Oberseite des Dornes 7 weggeschwenkt ist. Durch Verdrehen des Zahnrades 28 um ca. 40° im Uhrzeigersinn wird bewirkt, daß die Einfädeleinrichtung 21 entgegen dem Uhrzeigersinn in die Außerbetriebstellung geschwenkt wird, während die Einfädeleinrichtung 21', ebenfalls entgegen dem Uhrzeigersinn in die Inbetriebstellung geschwenkt wird. Die Umlaufrollen 22 und 22' sind jeweils auf einer Freilaufwelle 29 bzw. 29' gelagert.

Am Anfang des Dornes 7 sind paarweise Antriebswalzen 31 und 32 vorgesehen, die über einen nicht näher dargestellten Getriebezug mit dem Antrieb der Zuführeinrichtung 6 verbunden sind. Da der Durchmesser der Antriebswalzen 6 kleiner ist als der der Walzen 8 und 9 wird der Schlauch mit einer geringeren als der normalen Vorschubgeschwindigkeit auf den Dorn 7 aufgeschoben. Die Antriebswalzen 31 und 32 sitzen auf Freilaufwellen, so daß sie nur noch leer mitlaufen, sobald der Schlauch von den Walzen 8 erfaßt wird.

Aus Fig. 2 ist gut erkennbar, daß in Drehrichtung des Drehmessers 13 hinter dem Dorn 7 auf der Unterseite der Matrize 19 ein Gegenhalt 34 angeordnet ist. Der Gegenhalt 34 weist eine Anschlagfläche auf, die gegen die Schrumpfhülse 2 gerichtet ist und zwar an der Stelle, an der die Schrumpfhülse 2 zuletzt von dem Messer 13 abgeschnitten wird. Da der Gegenhalt 34 mit Abstand zur Unterseite der Matrize 19 angeordnet ist, kann sich das Drehmesser 13 zwischen Unterseite der Matrize und dem Gegenhalt 34 hindurchbewegen. Der Gegenhalt sitzt oberhalb der Bewegungsbahn der Verschlußenen der Flaschen.

Weiter in Drehrichtung des Drehmessers 13 hinter dem Dorn 7 sind Reinigungsschlitze 33 vorgesehen, an denen sich die Radialschneide 14 des Drehmessers 13 selbsttätig säubert und wetzt, so daß sich ein Nachschärfen der Radialschneide im wesentlichen erübrigt. Wie nicht dargestellt ist, kann das Drehmesser, bzw. dessen Radialschneide 14, durch eine Feder an die Unterseite 19 der Matrize angedrückt werden, so daß das Drehmesser immer im festen Kontakt über die Matrize geführt wird. Hierzu eignet sich besonders gut eine Blattfeder, die sich in Längsrichtung der Halterung des Drehmessers erstrecken kann. Obwohl bei dem hier dargestellten Ausführungsbeispiel die Form der Radialschneide, ausgehend von der Spitze 15 zwei aneinander anstoßende konkave Krümmungen aufweist, ist es auch günstig, wenn die Schneide 14 in Form eines Dreieckes mit zwei konvex nach außen gewölbten Katheten ausgebildet ist.

Im folgenden wird das erfindungsgemäße Verfahren anhand des Betriebes der oben beschriebenen Vorrichtung näher erläutert.

Zur Inbetriebnahme der Vorrichtung wird in die Einfädeleinrichtung 21 der Schlauch 5 eingelegt. Durch Verdrehen des Zahnrades 28 entgegen dem Uhrzeigersinn wird die Einfädeleinrichtung 21 in die in der Fig. 1 dargestellten Inbetriebstellung gebracht. Der Schlauch wird durch die Aufspreizführung 27 und über den Dorn 7 geführt, wo er von den Antriebswalzen 31, 32 und 8 und 9 erfaßt und zur Unterseite 18 des Dornes 7 gefördert wird. Gleichzeitig werden durch den Flaschenstern 20 Flaschen 4 in Richtung des Pfeiles F gefördert. Die Zuführung der Flaschen 4 ist mit der Zuführeinrichtung 6 für den Schlauch 5 synchronisiert. Während eine Flasche 4 mit ihrem Flaschenhals 3 in Richtung des Pfeiles F gefördert wird, wird gleichzeitig der Schlauch 5 in Richtung des Pfeiles U schräg nach unten gefördert. Der Flaschenhals 3 und das untere Ende des Schlauches 5 bewegen sich dabei aufeinander zu, wie in Fig. 1 bei der mittleren Flasche 4 zu erkennen ist. Da die Zuführung des Schlauches 5 schräg erfolgt, kann die Flasche 4 mit ihrem Flaschenhals 3 in das untere, offene Ende des Schlauches 5 eintauchen, ohne von diesem dabei behindert zu werden. Zu gleicher Zeit kann der Schlauch weitergefördert werden.

Wenn sich die Flasche 4 etwa in der in Fig. 1 anhand der mittleren Flasche 4 gezeigten Stellung befindet, schneidet die Radialschneide 14 den über die Unterseite 18 des Dornes 7 hinausstehenden Teil des Schlauches 5 (vgl. Fig. 2). Hierdurch entsteht eine Schrumpfhülse 2. Da die Schrumpfhülse von einem flach gelegten Schlauch stammt, hat sie nach dem Abschneiden das Bestreben, sich zusammenzulegen, weshalb sie sich an den Flaschenhals 3 seitlich anlegt. Beim Weiterfördern der Flasche 4 passiert die Oberseite der Schrumpfhülse 2 die in Förderrichtung F dahinterliegende Unterseite 30 der Matrize 19, die in diesem Bereich im wesentlichen horizontal ausgerichtet ist. Die Unterseite 30 bewirkt, ein genaues Positionieren der Schrumpfhülse 2 auf dem Flaschenhals 3. Der Gegenhalt 34 bewirkt, daß auch bei sehr hohen Durchsatzgeschwindigkeiten die Schrumpfhülse 2 beim Schneiden nicht verzogen und sicher auf das Verschlußende der Flasche 4 aufgekippt wird. Durch Erwärmen der Schlauches 5 vor dem Abschneiden kann das Schneiden der Schrumpfhülse noch weiter vereinfacht werden.

Nach Verlassen der Vorrichtung 1 wird die Flasche 4 einem, weil bekannt, hier nicht dargestellten Schrumpfofen zugeführt, wo die Schrumpfhülse 2 fest aufgeschrumpft wird.

Wenn die über die Einfädelungseinrichtung 21 abgewickelte, nicht dargestellte Schlauchrolle abgewickelt ist, wird durch Drehen des Zahnrades 28 im Uhrzeigersinn die Einfädelungseinrichtung 21' in Inbetriebstellung gebracht, so daß ohne Unterbrechung des kontinuierlichen Verfahrens der Schlauch 5' von der zweiten, nicht dargestellten Schlauchrolle eingezogen wird.

Obwohl bei dem Ausführungsbeispiel sowohl die Förderung der Flaschen 4 als auch die Zuführung des Schlauches kontinuierlich mit jeweils gleichbleibender Geschwindigkeit erfolgen kann, ist es auch möglich, die Zuführung des Schlauches mit einem wellenförmigen Geschwindigkeitsprofil zuzuführen, d.h., daß während des Abschneidens der Schrumpfhülse die Zuführgeschwindigkeit des Schlauches geringer ist, als während der übrigen Förderung des Schlauches. Die durchschnittlich Zuführgeschwindigkeit des Schlauches 5 beträgt bei dem hier gezeigten Ausführungsbeispiel bei einer Stundenleistung von 36.000 Fl/h, 20 cm pro Sekunde, Während des Abschneidens einer Schrumpfhülse kann die Vorschubgeschwindigkeit des Schlauches auf etwa die halbe mittlere Vorschubgeschwindigkeit zurückgenommen werden. Zwischen dem Abschneiden zweier Schrumpfhülsen kann die Vorschubgeschwindigkeit des Schlauches dann auf das 1 1/2-fache der mittleren Vorschubgeschwindigkeit ansteigen. Der Antrieb des Drehmessers 13 kann so gesteuert sein, daß sich das Messer sehr schnell bewegt, wenn eine Schrumpfhülse abgeschnitten wird, während es sonst langsamer bewegt wird. Sowohl für den wellenförmigen Antrieb des Drehmessers als auch des Schlauches kann eine Kurbelschleife vorgesehen sein.

Weiterhin ist auch vorstellbar, daß anstelle des Drehmessers eine Schneideinrichtung mit einem Laserstrahl zum Einsatz kommt. Der vom Laser ausgesandte Laserstrahl kann über eine Drehspiegeleinrichtung wie die Radialschneide des Drehmessers bewegt werden. Beim Vorsehen eines Lasers erübrigt sich die Matrize ; es ist dann auch nicht unbedingt notwendig, den Laserstrahl unmittelbar unter der Unterseite des Dornes auftreffen zu lassen.

Ferner ist es auch denkbar, daß das Drehmesser nicht volle Umdrehungen macht, sondern mit einer Doppelschneide ausgerichtet ist, und jeweils nur einen der Breite des Schlauches entsprechenden Winkelbereich überstreicht. Das Abschneiden der Schrumpfhülse erfolgt dann bei einer Hinbewegung und bei der anschließenden Rückbewegung des Drehmessers. Insbesondere bei einer solchen Ansteuerung des Drehmessers ist es möglich das Drehmesser über einen Schrittmotor anzutreiben der zwar getriebemäßig von der Zuführeinrichtung für den Schlauch entkoppelt, dafür aber steuerungsmäßig mit dieser gekoppelt ist.

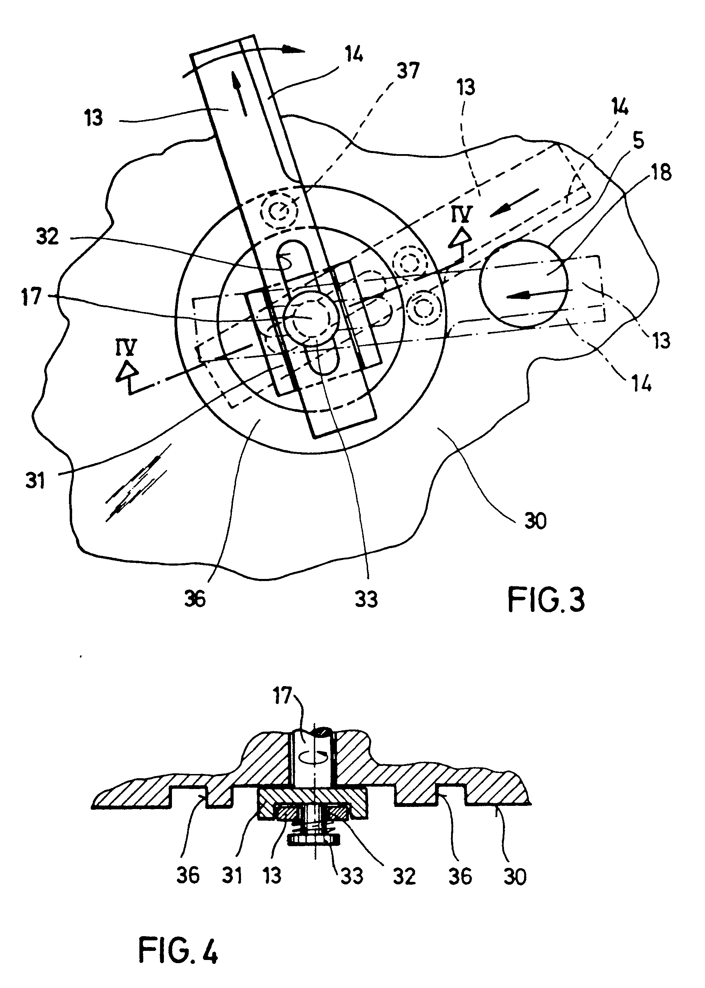

In den Figuren 3 und 4 ist eine Variante der Schneideinrichtung 13 aus Fig. 2 dargestellt. Die Schneideinrichtung 12 ist prinzipiell genauso aufgebaut, wie die zuvor beschriebene Schneideinrichtung, weshalb für gleiche und ähnliche Bauteile identische Bezugszeichen verwendet werden. Im folgenden wird lediglich auf die Besonderheiten der in den Figuren 3 und 4 gezeigten Variante eingegangen.

Wie aus den Figuren 3 und 4 deutlich hervorgeht, ist auf der Drehachse 17 eine Kulisse 31 drehfest angebracht. Das Drehmesser 13 weist ein Langloch 32 auf, das von einem an der Kulisse 31 befestigten Lagerbolzen 33 durchsetzt ist. Die Breite des Drehmessers 13 entspricht der Breite der Kulisse 31, so daß das Drehmesser 13 und damit die Radialschneide 14 radial zur Drehachse 17 verschieblich in der Kulisse 31 gehalten ist. Damit die Radialschneide 14 gut an der Unterseite 30 der Matrize 19 anliegt, ist an dem Lagerbolzen 33 eine Andrückfeder 34 vorgesehen, die sich an einer Schulter 35 des Lagerbolzens 33 und an dem Drehmesser 13 abstützt. In der Unterseite 30 der Matrize 19 ist eine Nutkurve 36 eingearbeitet, die in Fig. 4 im Schnitt dargestellt ist. Auf der der Unterseite 30 zugewandten Seite des Drehmessers 13 ist eine in die Nutkurve 36 eingreifende Kurvenrolle 37 angeordnet, die bei Drehung der Drehachse 17 eine radiale Verschiebung des Drehmessers 13 und damit der Radialschneide 14 bewirkt.

Im folgenden wird die Funktionsweise der Schneideinrichtung aus Fig. 3 und 4 näher erläutert.

Die Drehachse 17 dreht sich synchronisiert mit der Zuführeinrichtung 6 des Schlauchs 5, wobei auch hier Kurbelschleifengetriebe vorgesehen sein können, um das Abschneiden des Schlauches immer dann vorzunehmen, wenn der Schlauch 5 minimale Transportgeschwindigkeit aufweist, während die maximale Transportgeschwindigkeit dann auftritt, wenn der Schlauch 5 nicht geschnitten wird.

Wenn sich nun die Drehachse 17 dreht, durchläuft die Kurvenrolle 37 die Nutkurve 36 und bewirkt dadurch eine radiale Festlegung der Radialschneide 14 des Drehmessers 13. Die Nutkurve 36 ist nun so ausgeformt, daß der radiale Abstand zwischen der Kurvenrolle 37 und der Drehachse 17 zunimmt, bis die Radialschneide 14 kurz vor dem Schlauch 5 anlangt. Kurz vor Erreichen des Schlauches 5 läuft die Nutkurve 36 verstärkt in Richtung Drehachse 17, wodurch sich der radiale Abstand zwischen der Kurvenrolle 37 und der Drehachse 17 bei derem Weiterdrehen merklich verringert. Das ist, wie aus der gestrichelten und der strichpunktierten Darstellung des Drehmessers ersichtlich ist, genau dann der Fall, wenn die Radialschneide 14 des Drehmessers 13 den Schlauch 5 durchtrennt.

Obwohl bei der dargestellten Variante die Radialschneide 14 gerade ausgebildet ist, ist es auch denkbar, an der Radialschneide 14 eine Spitze vorzusehen, wie bei der Schneideinrichtung 12 aus Fig. 2.

Nachzutragen bleibt noch, daß in der in den Figuren 3 und 4 gezeigten Variante der Schneideinrichtung 12 die Drehrichtung des Messers 13 entgegengesetzt ist zu der Drehrichtung des Messers 13 aus Fig. 2. Auf die Funktionsfähigkeit der Einrichtung hat dies jedoch keinen Einfluß.

**Ansprüche**

1. Verfahren zum Aufsetzen einer Schrumpfhülse (2) auf das Verschlußende (3) eines angeförderten Behälters (4), bei dem die Schrumpfhülsen in Form eines Schlauches (5, 5') über einem Dorn (7) aufgefaltet, im aufgeweiteten Zustand zumindest teilweise von oben über das Verschlußende gestülpt und quer zur Längserstreckung des Dornes abgelängt werden, dadurch **gekennzeichnet,** daß die Behälter (4) einerseits und der Schlauch (5, 5') andererseits im wesentlichen kontinuierlich gefördert werden, daß der Schlauch (5, 5') Von schräg oben zugeführt wird, wobei die Förderrichtung (U) des Schlauches (5) eine der Förderrichtung (F) der Behälter (4) entgewengesetzte Komponente aufweist, und daß die Schrumpfhülse (2) unterhalb des Dornes (7) abgeschnitten wird, wenn das, in Förderrichtung (F) der Behälter (4) gesehen, vordere untere Ende des Schlauches (5) bereits unterhalb der Oberkante des Verschlußendes (3) des Behälters (4) liegt.

2. Verfahren nach Anspruch 1, dadurch gekennzeichnet, daß man mit dem Abschneiden der Schrumpfhülse (2) beginnt, wenn das, in Förderrichtung (F) der Behälter (4) gesehen, hintere untere Ende des Schlauches (5) noch oberhalb des Verschlußendes (3) des Behälters (4) liegt.

3. Verfahren nach Anspruch 1 oder 2, dadurch gekennzeichnet, daß der Schlauch (5) vor dem Abschneiden erwärmt wird.

4. Verfahren nach einem der Ansprüche 1 bis 3, dadurch gekennzeichnet, daß die Schrumpfhülse (2) in Förderrichtung (F) des Behälters (4) abgeschnitten wird.

5. Vorrichtung zum Durchführen des Verfahrens nach einem der Anspruche 1 bis 4, mit einer Zuführeinrichtung (6) für den Schlauch (5, 5'), einer Schneideinrichtung unterhalb des Dornes (7) zum Ablängen einer Schrumpfhülse (2) aus dem Schlauch (5) quer zu dessen Längserstreckung, und mit einer Zuführeinrichtung (20) für die Behälter (4) in im Wesentlichen horizontaler Richtung, dadurch gekennzeichnet, daß der Dorn (7) schräg angeordnet ist, so daß der Schlauch (5) entgegen der Förderrichtung (F) der Behälter (4) zugeführt wird, daß der vertikale Abstand zwischen dem Verschlußende (3) des Behälters (4) und der Schneideinrichtung (13, 14) etwa der Höhe der abzulängenden Schrumpfhülse (2) entspricht, wobei das, in Förderrichtung (F) der Behälter (4) gesehen, vordere untere Ende des Dornes (7) vertikal näher zu dem Verschlußende (3) des Behälters (4) angeordnet ist, während das hintere Ende vertikal weiter beabstandet ist.

6. Vorrichtung nach Anspruch 5, dadurch gekennzeichnet, daß die Schneideinrichtung unmittelbar unterhalb des unteren Endes des Dornes (7) angeordnet ist und eine sich um eine außerhalb des Dornes (7) liegende Drehachse (17) drehbare Radialschneide (14) aufweist.

7. Vorrichtung nach Anspruch 5 oder 6, dadurch gekennzeichnet daß der Dorn (7) an seiner Unterseite (18) von einer Matrize (19), eine Förderblende für den Schlauch (5) freilassend, umgeben ist, daß die Radialschneide (14) Bestandteil eines Drehmessers (13) ist, und daß die Unterseite (18) des Dornes (7) und die Matrize (19) als Gegenschneide mit der Radialschneide (14) des Drehmessers (13) zusammenwirken.

8. Vorrichtung nach einem der Ansprüche 5 bis 7, dadurch gekennzeichnet, daß die Drehrichtung des Drehmessers (13) im Bereich des Dornes (7) im wesentlichen mit der Förderrichtung (F) der Behälter (4) übereinstimmt.

9. Vorrichtung nach einem der Ansprüche 5 bis 8, dadurch gekennzeichnet, daß die, sich in Förderrichtung (F) der Behälter (4) anschließende Unterseite der Matrize (19) als eine in die Horizontale überge-hende Andrückfläche (30) für die Schrumpfhülsen (2) auf die Verschlußenden (3) ausgebildet ist.

10. Vorrichtung nach einem der Ansprüche 5 bis 9, dadurch gekennzeichnet, daß auf der Unterseite der Matrize (19) Reinigungsschlitze (33) ausgebildet sind.

11. Vorrichtung nach einem der Ansprüche 15 bis 10, dadurch gekennzeichnet, daß die Radialschneide (14), in ihrer Mitte eine Spitze (15) aufweisend, etwa dreiecksartig ausgebildet ist.

12. Vorrichtung nach einem der Ansprüche 5 bis 11, dadurch gekennzeichnet, daß an der Unterseite der Matrize (19) ein Gegenhalt (34) für die Schrumpfhülse (2) angebracht ist.

13. Vorrichtung nach einem der Ansprüche 5 bis 12, dadurch gekennzeichnet, daß die Zuführeinrichtung (20) für die Behälter (4) und die Zuführeinrichtung (6) für den Schlauch (5) mit der Schneideinrichtung (12) synchronisiert sind.

14. Vorrichtung nach einem der Ansprüche 5 bis 13, dadurch gekennzeichnet, daß der Antrieb des Drehmessers (13) der Schneideinrichtung (12) über einen Getriebezug mit der Zuführeinrichtung (6) des Schlauches (5) verbunden ist.

15. Vorrichtung nach Anspruch 14, dadurch gekennzeichnet, daß der Getriebezug ein Kurbel-schleifengetriebe mit wellenförmigem Geschwindig-keitsverlauf derart aufweist, daß während des Schneidvorganges des Schlauches (5) die Zuführeinrichtung (6) ihre niedrigste und das Drehmesser (13) seine höchste Geschwindigkeit aufweist.

16. Vorrichtung nach einem der Ansprüche 5 bis 15, dadurch gekennzeichnet, daß der Antrieb des Drehmessers (13) über eine Eintouren-Kupplung mit der Zuführeinrichtung (6) des Schlauches (5) verbunden ist.

17. Vorrichtung nach einem der Ansprüche 5 bis 16, dadurch gekennzeichnet, daß das Drehmesser (13) von einem gesteuerten Schrittmotor angetrieben wird.

18. Vorrichtung nach einem der Ansprüche 5 bis 17, dadurch gekennzeichnet, daß die Zuführeinrichtung (6) für den Schlauch (5) einlaufseitig eine auf einem Schwenkhebel (24) angeordnete Einfädeleinrichtung (21 ; 21') mit einer Umlaufrolle (22 ; 22') und eine Gegenwalze (23 ; 23') sowie einer nachgeordneten Aufspreizführung (27 ; 27') aufweist, wobei die Einfädeleinrichtung (21 ; 21') von einer Außerbetriebstellung, in der die Oberseite des Dornes (7) freiliegt, in eine Inbetriebstellung schwenkbar ist, in der die Aufspreizführung (27 ; 27') über die Oberseite des Dornes (7) greift.

19. Vorrichtung nach einem der Ansprüche 5 bis 18, dadurch gekennzeichnet, daß zwei Einfädeleinrichtungen (21 ; 21') vorgesehen sind, die wechselseitig in die Inbetriebstellung bringbar sind.

20. Vorrichtung nach einem der Ansprüche 5 bis 19, dadurch gekennzeichnet, daß am Dornenanfang Antriebswalzen (31, 32) vorgesehen sind, die über eine Untersetzung mit dem Antrieb der Zuführeinrichtung (6) des Schlauches (5 ; 5') verbunden und auf einer Freilaufwelle (29, 29') gelagert sind.

21. Vorrichtung nach Anspruch 6, dadurch gekennzeichnet, daß die Radialschneide (14) etwa in ihrer Schneidenlängsrichtung quer zur Drehachse (17) verschieblich gelagert und mit einer Steuereinrichtung (36, 37) verbunden ist, die während des Abschneidens des Schlauchs (5) die Radialschneide (14) radial verschiebt.

22. Vorrichtung nach Anspruch 21, dadurch gekennzeichnet, daß an der Drehachse 17 eine die Radialschneide (14) verschieblich halternde Kulissenführung (31) angebracht ist.

23. Vorrichtung nach Anspruch 21 oder 22, dadurch **gekennzeichnet**, daß die Steuereinrichtung eine in der Unterseite (30) der Vorrichtung angeordnete Nutkurve (36) umfaßt, in die eine an der Radialschneide (14) angebrachte Kurvenrolle (37) eingreift.

## Claims

1. Method of applying a shrinkable sleeve (2) to the closure end (3) of a delivered container (4), wherein the shrinkable sleeves are folded in the form of a tube (5, 5') over a mandrel (7), are fitted in the expanded state at least partly from above over the closure end and are cut off transversely to the longitudinal direction of the mandrel, characterized in that the containers (4) on the one hand and the tube (5, 5') on the other hand are conveyed substantially continually, that the tube (5, 5') is fed obliquely from above, the conveying direction (U) of the tube (5) having a component opposed to the conveying direction (F) of the containers (4), and that the shrinkable sleeve (2) is cut off beneath the mandrel (7) when the forward, lower end, as viewed in the conveying direction (F) of the containers (4), of the tube (5) is already below the upper edge of the closure end (3) of the container (4).

2. Method according to Claim 1, characterized in that the cutting-off of the shrinkable sleeve (2) commences when the rear, lower end, as viewed in the conveying direction (F) of the containers (4), of the tube (5) is still above the closure end (3) of the container (4).

3. Method according to Claim 1 or 2, characterized in that the tube (5) is heated before cutting off.

4. Method according to one of Claims 1 to 3, characterized in that the shrinkable sleeve (2) is cut off in the conveying direction (F) of the container (4).

5. Apparatus for carrying out the method according to one Claims 1 to 4, comprising a feed device (6) for the tube (5, 5'), a cutting device beneath the mandrel (7) for cutting off a shrinkable sleeve (2) from the tube (5) transversaly to its longitudinal extent, and comprising a feed device (20) for the containers (4) in a substantially horizontal direction, characterized in that the mandrel (7) is mounted obliquely, so that the tube (5) is fed in opposition to the conveying direction (F) of the containers (4), that the vertical distance between the closure end (3) of the container (4) and the cotting device (13, 14) is approximately equal to the height of the shrinkable sleeve (2) to be cut off, the forward, lower end, as seen in the conveying direction (F) of the containers (4), of the mandrel (7) being disposed vertically nearer to the closure end (3) of the container (4), whereas the rear end is vertically further away.

6. Apparatus according to Claim 5, characterized in that the cutting device is disposed immediately below the lower end of the mandrel (7) and possesses a radial cutter (14), rotatable about an axis of rotation (17) situated outside the mandrel (7).

7. Apparatus according to Claim 5 or 6, characterized in that the mandrel (7) is surrounded, at its lower end (18), by a die plate (19) leaving a feed aperture for the tube (5), that the radial cutter (14) is a component of a rotary knife (13), and that the lower face (18) of the mandrel (7) and the die plate (19) cooperate as counter-cutter with the radial cutter (14) of the rotary knife (13).

8. Apparatus according to one of Claims 5 to 7, characterized in that the rotational direction of the rotary knife (13) in the region of the mandrel (7) is substantially the same as the conveying direction (F) of the containers (4).

9. Apparatus according to one Claims 5 to 8, characterized in that the lower face of the die plate (19) adjoining in the conveying direction (F) of the containers (4) is formed as a pressing surface (30), leading into the horizontal, for pressing the shrinkable sleeves (2) onto the closure ends (3).

10. Apparatus according to one of Claims 5 to 9, characterized in that cleaning slits (33) are formed on the lower face of the die plate (19).

11. Apparatus according to one of Claims 5 to 10, characterized in that the radial cutter (14), possessing a tip (15) at its centre, is of approximately triangular shape.

12. Apparatus according to one of Claims 5 to 11, characterized in that a holder (34) for the shrinkable sleeve (2) is mounted on the lower face of the die plate (19).

13. Apparatus according to one of Claims 5 to 12, characterized in that the feed device (20) for the containers (4) and the feed device (6) for the tube (5) are synchronized with the cutting device (12).

14. Apparatus according to one of Claims 5 to 13, characterized in that the drive for the rotary knife (13) of the cutting device (12) is connected by a transmission train with the feed device (6) for the tube (5).

15. Apparatus according to Claim 14, characterized in that the transmission train is a crankslide oscillator drive having a wave-shaped velocity curve such that, during the cutting operation for the tube (5), the feed device (6) has its lowest speed and the rotary knife (13) its highest speed.

16. Apparatus according to one of Claims 5 to 15, characterized in that the drive for the rotary knife (13) is connected by a single-revolution coupling with the feed device (6) for the tube (5).

17. Apparatus according to one of Claims 5 to 16, characterized in that the rotary knife (13) is driven by a controlled stepping motor.

18. Apparatus according to one of Claimss 5 to 17, characterized in that the feed device (6) for the tube (5) possesses, at its inlet side, a threading device (21 ; 21') mounted on a pivoting lever (24) and comprising a planetary roller (22 ; 22') and a counter-roller (23 ; 23') and also a following splaying guide (27 ; 27'), the threading device (21 ; 21') being pivotal from an inoperative position in which the upper face of the mandrel (7) is exposed into an operating position, in which the splaying guide (27 ; 27') engages over the upper end of the mandrel (7).

19. Apparatus according to one of Claims 5 to 18, characterized in that two threading devices (21 ; 21') are provided, which can be brought alternately into the operating position.

20. Apparatus according to one of Claims 5 to 19, characterized in that, at the starting end of the mandrel, drive rollers (31, 32) are provided, which are connected by a reduction gear with the drive for the feed device (6) for the tube (5 ; 5') and are journalled on a freewheeling shaft (29, 29').

21. Apparatus according to Claim 6, characterized in that the radial cutter (14) is journalled, displaceable transversely to the axis of rotation (17) approximately in its cutting longitudinal direction, and is connected with a control device (36, 37) which displaces the radial cutter (14) radially during the cutting-off of the tube (5).

22. Apparatus according to Claim 21, characterized in that a slide guide (31), holding the radial cutter (14) displaceably, is mounted on the axis of rotation (17).

23. Apparatus according to Claim 21 or 22, characterized in that the control device comprises a cam groove (36) disposed in the lower face (30) of the apparatus, into which a cam roller (37) mounted on the radial cutter (14) engages.

## Revendications

1. Procédé pour mettre en place un manchon rétractable (2) sur l'extrémité de fermeture 3 d'un récipient amené (4), procédé dans lequel les manchons rétractables présentés sous la forme d'un boyau (5, 5') sont dépliés sur un mandrin (7), puis engagés à l'état élargi au moins partiellement d'en haut sur l'extrémité de fermeture et tronçonnés transversalement à l'étendue longitudinale du mandrin, caractérisé en ce que les récipients (4), d'une part, et le boyau (5, 5'), d'autre part, sont transportés sensiblement en continu, en ce que le boyau (5, 5') est amené obliquement d'en haut, le sens de transport (U) du boyau (5) présentant une composante opposée au sens de transport (F) des récipients (4), et en ce que le manchon rétractable (2) est détaché par tranchage au-dessous du mandrin (7) lorsque l'extrémité inférieure, située à l'avant dans le sens de transport (F) des récipients (4), du boyau (5) se trouve déjà au-dessous du bord supérieur de l'extrémité de fermeture (3) du récipient (4).

2. Procédé selon la revendication 1, caractérisé en ce que l'on commence à trancher le manchon rétractable (2) lorsque l'extrémité inférieure, située à l'arrière pour un observateur regardant dans le sens de transport (F) des récipients (4), du boyau (5) se trouve encore au-dessus de l'extrémité de fermeture (3) du récipient (4).

3. Procédé selon la revendication 1 ou 2, caractérisé en ce que le boyau (5) est chauffé avant le tranchage.

4. Procédé selon l'une quelconque des revendications précédentes, caractérisé en ce que le manchon rétractable (2) est tranché dans le sens de transport (F) du récipient (4).

5. Dispositif pour la mise en oeuvre du procédé selon l'une quelconque des revendications précédentes, équipé d'un mécanisme d'amenée (6) pour le boyau (5, 5'), d'un mécanisme de coupe situé au-dessous du mandrin (7) pour détacher un manchon rétractable (2) en tronçonnant le boyau (5) transversalement à son étendue longitudinale, et d'un mécanisme (20) pour amener les récipients (4) dans une direction sensiblement horizontale, caractérisé en ce que le mandrin (7) est disposé obliquement de sorte que le boyau (5) est amené en sens contraire du sens de transport (F) des récipients (4), en ce que la distance verticale entre l'extrémité de fermeture (3) du récipient (4) et l'équipement de coupe (13, 14) correspond sensiblement à la hauteur du manchon rétractable à détacher (2), l'extrémité inférieure, située à l'avant pour un observateur regardant dans le sens de transport (F) des récipients (4), du mandrin (7) étant disposée verticalement plus près de l'extrémité de fermeture (3) du récipient (4), alors que l'extrémité arrière en est verticalement plus éloignée.

6. Dispositif selon la revendication 5, caractérisé en ce que le mécanisme de coupe est monté directement au-dessous de l'extrémité inférieure du mandrin (7) et présente un tranchant radial (14) pouvant tourner autour d'un axe de rotation (17) situé à l'extérieur du mandrin (7).

7. Dispositif selon la revendication 5 ou 6, caractérisé en ce que le mandrin (7) est entouré au niveau de son dessous (18) par une matrice (19), laissant libre une fente de transport pour le boyau (5), en ce que le tranchant radial (14) fait partie d'une lame rotative (13) et en ce que le dessous (18) du mandrin (7) et la matrice (19) en tant que tranchant complémentaire coopèrent avec le tranchant radial (14) de la lame rotative (13).

8. Dispositif selon l'une quelconque des revendications 5 à 7, caractérisé en ce que le sens de rotation de la lame rotative (13) correspond, dans la région du mandrin (7), sensiblement au sens de transport (F) des récipients (4).

9. Dispositif selon l'une quelconque des revendications 5 à 8, caractérisé en ce que le côté inférieur de la matrice (19) faisant suite au mandrin dans le sens de transport (F) des récipients (4) est réalisé sous la forme d'une surface d'appui (30), qui après une transition passe dans le plan horizontal, pour mettre les manchons rétractables (2) en place sur les extrémités de fermeture (3).

10. Dispositif selon l'une quelconque des revendications 5 à 9, caractérisé en ce que dans dans le côté inférieur de la matrice (19) sont ménagées des fentes de nettoyage (33).

11. Dispositif selon l'une quelconque des revendications 5 à 10, caractérisé en ce que le tranchant radial (14), présentant dans son milieu une pointe (15), est réalisé sensiblement sous une forme triangulaire.

12. Dispositif selon l'une quelconque des revendications 5 à 11, caractérisé en ce que sur le côté inférieur de la matrice (19) est monté un organe de retenue (34) pour le manchon rétractable (2).

13. Dispositif selon l'une quelconque des revendications 5 à 12, caractérisé en ce que le mécanisme d'amenée (20) pour les récipients (4) et le mécanisme d'amenée (6) pour le boyau (5) sont synchronisés avec le mécanisme de coupe (12).

14. Dispositif selon l'une quelconque des revendications 5 à 13, caractérisé en ce que le mécanisme d'entraînement de la lame rotative (13) du mécanisme de coupe (12) est relié par l'intermédiaire d'un train d'engrenages au mécanisme d'amenée (6) pour le boyau (5).

15. Dispositif selon la revendication 14, caractérisé en ce que le train d'engrenages comporte un mécanisme à manivelle et coulisse présentant un profil de vitesse ondulé de telle manière qu'au cours du processus de coupe du boyau (5) le mécanisme d'amenée (6) présente sa vitesse minimale et la lame rotative (13) sa vitesse maximale.

16. Dispositif selon l'une quelconque des revendications 5 à 15, caractérisé en ce que le mécanisme d'entraînement de la lame rotative (13) est relié, par l'intermédiaire d'un embrayage à un tour, au mécanisme d'amenée (6) pour le boyau (5).

17. Dispositif selon l'une quelconque des revendications 5 à 16, caractérisé en ce que la lame rotative (13) est entraînée par un moteur pas à pas commandé.

18. Dispositif selon l'une quelconque des revendications 5 à 17, caractérisé en ce que le mécanisme d'amenée (6) pour le boyau (5) comporte du côté d'entrée un mécanisme d'enfilage (21 ; 21') monté sur un levier basculant (24) et équipé d'un cylindre rotatif (22 ; 22') et d'un cylindre complémentaire (23 ; 23') ainsi que d'un guide à écartement (27 ; 27') monté en aval de ces derniers, le mécanisme d'enfilage (21 ; 21') pouvant être amené, par basculement, à partir d'une position hors service, dans laquelle le dessus du mandrin (7) est dégagé, dans une position de mise en service, dans laquelle le guide à écartement (27 ; 27') s'engage sur le dessus du mandrin (7).

19. Dispositif selon l'une quelconque des revendications 5 à 18, caractérisé en ce qu'il est prévu deux mécanismes d'enfilage (21 ; 21') qui peuvent être amenés alternativement dans la position de mise en service.

20. Dispositif selon l'une quelconque des revendications 5 à 19, caractérisé en ce qu'au niveau du commencement du mandrin sont prévus des cylindres moteurs (31, 32) qui par l'intermédiaire d'un mécanisme démultiplicateur sont reliés à l'organe d'entraînement du mécanisme d'amenée (6) pour le boyau (5 ; 5') et sont montés sur un arbre à roue libre (29, 29').

21. Dispositif selon la revendication 6, caractérisé en ce que le tranchant radial (14) est monté de façon à pouvoir coulisser sensiblement dans sa direction longitudinale transversalement à l'axe de rotation (17) et est relié à un mécanisme de commande (36, 37) qui lors du détachement du boyau (5) fait coulisser le tranchant radial (14) radialement.

22. Dispositif selon la revendication 21, caractérisé en ce que sur l'axe de rotation (17) est monté un guide formant coulisse (31) qui retient le tranchant radial (14) de façon que celui-ci puisse coulisser.

23. Dispositif selon la revendication 21 ou 22, caractérisé en ce que le mécanisme de commande comprend une came à rainure ménagé dans le côté inférieur (30) de la matrice (19) et dans laquelle s'engage un galet guidé (37) monté sur le tranchant radial (14).

EP 0 330 167 B1

FIG. 1

12

FIG.2

EP 0 330 167 B1

FIG.3

FIG.4

14